# FASCICULE DE BREVET EUROPEEN

(11) **EP 3 998 555 B1**
(45) Date de publication et mention de la délivrance du brevet: **18.06.2025**
(21) Numéro de dépôt: 21206408.3
(22) Date de dépôt: 04.11.2021
(51) Int. Cl.: G06N 3/063, G06N 3/0464, G06N 3/094

(54) **PROCÉDÉ DE TRAITEMENT DE DONNÉES PAR UN RÉSEAU DE NEURONES ARTIFICIELS AVEC EXÉCUTIONS GROUPÉES D'OPÉRATIONS INDIVIDUELLES POUR ÉVITER LES ATTAQUES PAR CANAL AUXILIAIRE, ET SYSTÈME CORRESPONDANT**
VERFAHREN ZUR VERARBEITUNG VON DATEN DURCH EIN KÜNSTLICHES NEURONALES NETZ MIT GEBÜNDELTEN AUSFÜHRUNGEN VON EINZELVORGÄNGEN ZUR VERMEIDUNG VON ATTACKEN ÜBER EINEN HILFSKANAL UND ENTSPRECHENDES SYSTEM
METHOD FOR PROCESSING DATA BY AN ARTIFICIAL NEURAL NETWORK WITH GROUP EXECUTIONS OF INDIVIDUAL OPERATIONS FOR PREVENTING ATTACKS BY AUXILIARY CHANNEL, AND CORRESPONDING SYSTEM

(30) Priorité: 05.11.2020 FR 2011363
(43) Date de publication de la demande: 18.05.2022
(73) Titulaire: IDEMIA Public Security France, 92400 Courbevoie (FR)
(72) Inventeur: CHABANNE, Hervé, 92400 Courbevoie (FR); GUIGA, Linda, 75016 Paris (FR); DANGER, Jean-Luc, 92160 Antony (FR)
(74) Mandataire: IPS

(56) Documents cités:
- SHAFIEE ALI ET AL: "ISAAC: A Convolutional Neural Network Accelerator with In-Situ Analog Arithmetic in Crossbars", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18 June 2016 (2016-06-18), pages 14 - 26, XP032950645, ISSN: 1063-6897, ISBN: 978-0-7695-3174-8, [retrieved on 20160824], DOI: 10.1109/ISCA.2016.12
- KAZUSHIGE GOTO ET AL: "Anatomy of high-performance matrix multiplication", ACM TRANSACTIONS ON MATHEMATICAL SOFTWARE, ACM, NEW YORK, NY, US, vol. 34, no. 3, 16 May 2008 (2008-05-16), pages 1 - 25, XP058394484, ISSN: 0098-3500, DOI: 10.1145/1356052.1356053
- HONG SANGHYUN ET AL: "HOW TO 0WN NAS IN YOUR SPARE TIME-Hong/How-to-0wn-NAS-in-Your-Spare-Time", 17 February 2020 (2020-02-17), pages 1 - 16, XP055826051, Retrieved from the Internet <URL:https://arxiv.org/pdf/2002.06776v1.pdf> [retrieved on 20210720]
- CHABANNE HERVÉ ET AL: "Telepathic Headache: Mitigating Cache Side-Channel Attacks on Convolutional Neural Networks", 9 June 2021, ADVANCES IN INTELLIGENT DATA ANALYSIS XIX; [LECTURE NOTES IN COMPUTER SCIENCE; LECT.NOTES COMPUTER], SPRINGER INTERNATIONAL PUBLISHING, CHAM, PAGE(S) 363 - 392, ISBN: 978-3-540-28540-3, ISSN: 0302-9743, XP047598627
- CHABANNE HERVÉ ET AL: "Side channel attacks for architecture extraction of neural networks", vol. 6, no. 1, 18 March 2021 (2021-03-18), pages 3 - 16, XP055825665, ISSN: 2468-2322, Retrieved from the Internet <URL:https://onlinelibrary.wiley.com/doi/full-xml/10.1049/cit2.12026> [retrieved on 20210720], DOI: 10.1049/cit2.12026

## Description

### Domaine Technique

L'invention se rapporte au domaine du traitement de données, en particulier au domaine du traitement de données par des réseaux de neurones artificiels.

### Technique antérieure

De la technique antérieure, on connait des réseaux de neurones convolutifs (« Convolutional Neural Networks » en anglais) qui sont utilisés pour traiter des données, par exemple des images.

Dans la présente description, on utilise l'expression « neurone » pour désigner un neurone artificiel, et plus précisément le résultat d'un calcul propre au neurone.

Les réseaux de neurones artificiels peuvent comprendre des couches appelées convolutives qui sont définies par l'application d'une matrice de filtres à une matrice de neurones d'entrée (de la couche précédente dans le réseau) pour obtenir une matrice de neurones de la couche. Généralement, chaque neurone d'une couche convolutive est associé par son filtre à une fenêtre de la matrice de neurones de la couche précédente dans le réseau, qu'on appelle un champ récepteur. Un champ récepteur inclut donc les neurones de la couche précédente. En se déplaçant dans la matrice de neurones d'entrée d'une couche convolutive, on déplace également ce champ récepteur d'une manière connue en soi.

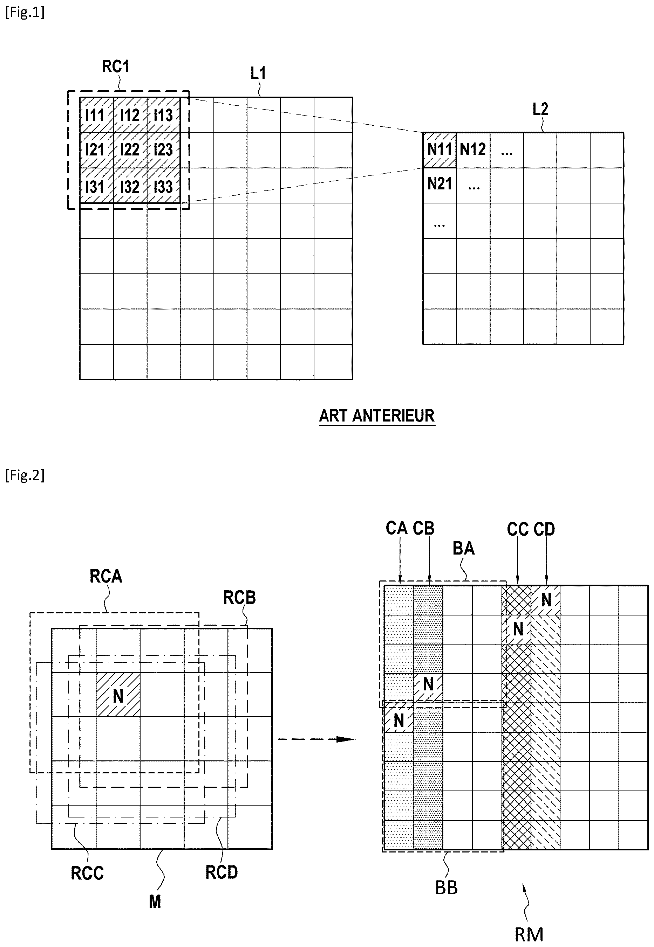

Par exemple, la figure 1 illustre deux couches successives de neurones L1 et L2 d'un réseau de neurones artificiels. L2 est une matrice de neurones d'une couche convolutive qui va traiter les valeurs obtenues par la matrice précédente L1. Le premier neurone N11 de la couche L2 est configuré pour recevoir une valeur par application d'un filtre à la première fenêtre RC1 qui contient les valeurs I11, I12, I13, I21, I22, I31, I32, et I33. On dit que le filtre est un filtre de taille trois (la hauteur du filtre est de trois et la largeur du filtre est de trois). Un produit scalaire (« dot product » en anglais) est alors calculé pour ce premier neurone à partir de toutes les valeurs I11 à I33 et du filtre associé au neurone N11. Le neurone N12 situé à droite du neurone N11 sera lui associé par son filtre à une fenêtre qui sera décalée vers la droite d'un pas donné par rapport à la première fenêtre RC1. Le neurone N21 situé en dessous du neurone N11 sera lui associé à une fenêtre qui sera décalée vers le bas de ce pas donné (ou d'un autre pas) par rapport à la première fenêtre RC1. On peut noter que le pas donné peut être plus petit que la taille du filtre, de sorte que des fenêtres qui se suivent peuvent se chevaucher.

Les réseaux de neurones convolutifs contiennent également des couches de mise en commun (« pooling » en anglais) dans lesquelles un neurone va également être associé à une fenêtre de valeurs obtenues par la couche précédente. Un exemple de neurone de couche de mise en commun est un neurone qui obtient la valeur maximale de la fenêtre qu'il traite (« max pooling » en anglais).

Il convient de noter que les données traitées en entrée peuvent avoir une profondeur, c'est-à-dire que les données traitées en entrées peuvent être des matrices organisées sous forme de tableaux ou de vecteurs ayant cette profondeur, dans ce cas, on parlera plutôt de tenseurs de valeurs. Tel est également le cas pour les couches convolutives ou de pooling dont les neurones et les filtres peuvent avoir une profondeur qui diffère de celle des tenseurs de valeurs qu'ils traitent.

L'implémentation du traitement d'une couche convolutive comporte un nombre élevé de multiplications pour mettre en œuvre tous les produits scalaires. On aborde généralement l'implémentation d'une couche convolutive par l'algorithme bien connu de la personne du métier appelé « GeMM : General Matrix Multiply ». Selon cet algorithme, on élabore une matrice bidimensionnelle réorganisée dans laquelle chaque colonne correspond aux valeurs d'une desdites fenêtres de la matrice d'entrée à traiter (si la matrice a une profondeur, la colonne contient toutes les valeurs des tableaux/vecteurs appartenant à la fenêtre), et on élabore une matrice de filtres dans laquelle chaque ligne correspond à un filtre de la couche convolutive (la largeur de cette matrice de filtres correspond au produit de la profondeur du filtre par le nombre de neurones présent dans chaque champs récepteur, la profondeur du filtre étant égale à la profondeur des données traitées en entrées).

L'algorithme détermine alors le produit scalaire entre chaque ligne de la matrice de filtres et chaque colonne de la matrice bidimensionnelle réorganisée. Par abus de langage, on parle également de multiplication entre une ligne de la matrice de filtres et une colonne de la matrice bidimensionnelle réorganisée.

La librairie logicielle TensorFlow bien connue de l'homme du métier implémente les couches convolutives de cette manière.

On peut noter que la matrice bidimensionnelle réorganisée a une largeur égale au nombre de champs récepteurs _et une hauteur égale aux nombres de valeurs du champ récepteur multiplié par la profondeur de cette matrice d'entrée. La matrice de filtres a une hauteur égale au nombre de filtres à appliquer à la matrice bidimensionnelle, et donc à la profondeur de la couche convolutive (nombre de canaux)., et une largeur égale aux nombres de valeurs du champ récepteur multiplié par la profondeur de cette matrice d'entrée.

Il est connu qu'un tiers peut mettre en œuvre des attaques pour déterminer la structure des réseaux de neurones convolutifs. La possibilité de mettre en œuvre ces attaques pose des problèmes de sécurité, en particulier lorsque les réseaux de neurones convolutifs sont utilisés pour mettre en œuvre des tâches dans des domaines sensibles telles que l'authentification ou le traitement d'informations propres à des utilisateurs.

Ces attaques sont souvent du type attaque par canal auxiliaire (« SCA : Side Channel Attack » selon l'acronyme anglo-saxon bien connu de l'homme du métier).

Le document antérieur « Cache telepathy : Leveraging shared resource attacks to learn dnn architectures » (M. Yan, C. W. Fletcher, et J. Torillas, CoRR, vol. abs/1808.04761, 2018) décrit une attaque par canal auxiliaire dans laquelle un attaquant compte le nombre de multiplications de matrices (c'est-à-dire ce qui est mis en œuvre dans l'algorithme GeMM), détermine la taille de ces matrices, et en déduit la taille et le nombre des filtres.

Dans le document antérieur « Csi neural network : Using side-channels to recover your artificial neural network information » (L. Batina, S. Bhasin, D. Jap, et S. Piceck, CoRR, vol. abs/1810.09076, 2018), il est décrit que dès qu'un attaquant arrive à distinguer deux neurones à partir d'une analyse simple de la consommation (« Simple Power Analysis » en anglais), il est possible de mettre en oeuvre une analyse de consommation différentielle (« Differential Power Analysis » en anglais) pour faire la distinction entre les différentes couches.

On comprend donc que l'utilisation de l'algorithme GeMM rend les réseaux de neurones artificiels avec des couches convolutives particulièrement vulnérables.

D'autres attaques ont été décrites, en particulier dans les documents :
- « Reverse engineering convolutional neural networks through side-channel information leaks » (W. Hua, Z. Zhang, et G. E. Suh, « Proceedings of the 55th Annual Design Automation Conference DAC 2018 », San Francisco, CA, USA, 24-29 juin 24-29, 2018, pp. 4:1-4:6, ACM, 2018);
- « Security analysis of deep neural networks operating in the presence of cache side-channel attacks » (S. Hong, M. Davinroy, Y. Kaya, S. N. Locke, I. Rackow, K. Kulda, D. Dachman-Soled, et T. Dumitras, CoRR, vol. abs/1810.03487, 2018);
- « How to 0wn NAS in your spare time » (S. Hong, M. Davinroy, Y. Kaya, D. Dachman-Soled, et T. Dumitras, CoRR, vol. abs/2002.06776, 2020);
- « Stealing neural networks via timing side channels » (V. Duddu, D. Samanta, D. V. Rao, et V. E. Balas, CoRR, vol. abs/1812.11720, 2018);
- « Open DNN box by power side-channel attack » (Y. Xiang, Z. Chen, Z. Chen, Z. Fang, H. Hao, J. Chen, Y. Liu, Z. Wu, Q. Xuan, et X. Yang, CoRR, vol. abs/1907.10406, 2019);
- « Neural network model extraction attacks in edge devices by hearing architectural hints » (X. Hu, L. Liang, L. Deng, S. Li, X. Xie, Y. Ji, Y. Ding, C. Liu, T. Sherwood, et Y. Xie, CoRR, vol. abs/1903.03916, 2019).

Par exemple, dans les documents « Security analysis of deep neural networks operating in the presence of cache side-channel attacks » et « How to 0wn NAS in your spare time », l'attaquant utilise la plateforme Mastik, par Yuval Yarompour mettre en œuvre des attaques par canal auxiliaire sur des réseaux de neurones profonds. Dans le document « Reverse engineering convolutional neural networks through side-channel information leaks », les accès mémoire sont surveillés pour déterminer l'architecture d'un réseau de neurones artificiels.

La résolution de ce problème a déjà été abordée dans l'état de la technique antérieure.

En particulier, le document « Mitigating reverse engineering attacks on deep neural networks » (Y. Liu, D. Dachman-Soled, et A. Srivastava 2019 IEEE Computer Society Annual Symposium on VLSI, ISVLSI 2019Miami, FL, USA, July 15-17, 2019, pp. 657-662, IEEE, 2019) propose une solution pour éviter l'attaque décrite dans le document « Reverse engineering convolutional neural networks through side-channel information leaks ». Cette solution utilise des techniques de mélange (« Oblivious shuffle » en anglais), de distribution aléatoire de l'espace d'adressage (« Adress Space Layout Randomization » en anglais), et des accès mémoire factices pour camoufler les traces des accès mémoires, tout en mitigeant les ressources nécessaires.

Dans le document « How to 0wn NAS in your spare time », il est notamment enseigné qu'une mise en œuvre aléatoire des calculs pour contrer les attaques aurait un impact trop important sur les ressources nécessaires.

La présente invention améliore la sécurité des réseaux de neurones convolutifs, en rendant difficile la mise en œuvre d'une attaque par canal auxiliaire, tout en limitant la quantité de ressources nécessaires.

### Objet et résumé de l'invention

La présente invention répond à ce besoin en proposant un procédé de traitement sécurisé de données par un réseau de neurones artificiels selon la revendication 1.

Le procédé évite une attaque par canal auxiliaire.

Ce procédé peut être mis en œuvre par un système informatique (par exemple un ordinateur), et le réseau de neurones artificiels peut être enregistré sur un support de données lisible par un ordinateur.

Les sous-matrices et les matrices réorganisées sont des objets qui peuvent ne pas être mémorisés dans une mémoire du système informatique qui met en œuvre le traitement de données. Par contre, les valeurs des groupes de valeurs choisies doivent vérifier la condition suivante : pouvoir remplir une sous-matrice qui, agencée avec d'autres sous-matrice d'une même couche, formera une matrice réorganisée telle que définie ci-avant. Dans la présente description, on peut parler des valeurs de la sous-matrice par abus de langage, ces valeurs étant celles d'un groupe de valeurs.

Par exemple, l'identification des valeurs choisies peut être mise en œuvre au cours d'une étape préalable dans laquelle on obtient les matrices réorganisée et les sous-matrices. Cette identification peut correspondre à une utilisation de tableaux dans lesquelles ces valeurs seront mémorisées petit à petit lors du traitement des données par le réseau.

Si la couche est une couche convolutive, les opérations individuelles sont par exemple les multiplications individuelles entre chaque valeur de la sous-matrice et la valeur correspondante de filtre par laquelle il faut les multiplier. Alternativement, une opération individuelle peut désigner les multiplications individuelles et les additions à mettre en œuvre pour une colonne d'une sous-matrice.

Si la couche est une couche de mise en commun, les opérations individuelles peuvent être des sous-échantillonnages (« down-sampling » en anglais) mis en œuvre pour une colonne de sous-matrice. Par exemple, une opération individuelle peut désigner l'obtention de la valeur maximale d'une colonne de sous-matrice.

On considère que les valeurs d'entrée et donc des sous-matrices sont disponibles lorsqu'elles ont été calculées par traitement par la couche précédente.

**Aussi,** la matrice réorganisée est réorganisée comme une matrice réorganisée utilisée dans l'algorithme GeMM décrit ci-avant. Cela étant, l'invention s'écarte de l'algorithme GeMM en ce qu'il n'y a pas une simple multiplication de la matrice réorganisée par une matrice de filtres, au moins pour une couche convolutive.

Ainsi, l'invention change l'ordre dans lequel les multiplications (s'il s'agit d'une couche convolutive) sont mises en œuvre, et cet ordre dépend de comment les groupes de valeurs sont définis, notamment au moyen de divisions ou de découpages de matrices réorganisées en plusieurs sous-matrices.

Le découpage en sous-matrices permet de contrôler les ressources nécessaires pour mettre en œuvre l'invention sur un système informatique : on utilise moins de ressources que si toutes les opérations sont réalisées aléatoirement.

La personne du métier saura identifier les valeurs qui sont disponibles.

Les largeurs aléatoires peuvent avoir été définies préalablement dans une étape de génération de nombre aléatoires. En particulier, au moins deux largeurs différentes peuvent être utilisées pour les largeurs des sous-matrices.

Le chevauchement des sous-matrices peut impliquer que des calculs individuels sont mis en œuvre plusieurs fois, ce qui n'est pas un obstacle et rend encore plus difficile la mise en œuvre d'attaques par canal auxiliaire. Par contre, toutes les valeurs d'une matrice réorganisée appartiennent chacune à une sous-matrice (ce qui est obtenu par le caractère contigu ou chevauchant des sous-matrices).

On peut noter que la présente invention diffère du procédé de traitement de données décrit dans le document « ISAAC: A convolutional neural network accelerator with in-situ analog arithmetic in crossbars » (A. Shafiee, A. Nag, N. Muralimanohar, R. Balasubramonian, J. P. Strachan, M. Hu, R. S. Williams, et V. Srikumar, 43ième ACM/IEEE Annual International Symposium on Computer Architecture, ISCA 2016, Seoul, South Korea, June 18-22, 2016, pp. 14-26, IEEE Computer Society, 2016) en ce qu'on utilise des sous-matrices d'une matrice réorganisée. En effet, ce document prévoit l'utilisation d'un tampon (« buffer » en anglais) dans lequel on stocke les résultats des calculs individuels de chaque couche, et une mise en œuvre de calculs en parallèle, mais il ne propose pas de diviser une matrice réorganisée en sous-matrice et pas non plus l'ordre d'exécution des calculs individuels prévu ci-avant.

Selon un mode de mise en œuvre particulier, les exécutions groupées sont en outre mises en œuvre selon :
un ordre d'exécution des sous-matrices de couches différentes dans lequel on traite en priorité une sous-matrice d'une première couche par rapport à une sous-matrice d'une deuxième couche si les valeurs de ces sous-matrices sont disponibles et si la première couche est plus éloignée de l'entrée du réseau de neurones artificiels que la deuxième couche.

On choisira de préférence des groupes de valeurs et donc des sous-matrices suffisamment petites pour que des valeurs soient disponibles pour une couche éloignée avant que toutes les opérations individuelles d'une couche moins éloignée ne soient effectuées.

Par exemple, on peut choisir les groupes de valeurs de sorte qu'il existe au moins une sous-matrice d'une couche dont les valeurs peuvent être disponibles sans que toutes les valeurs de la couche précédente ne soient disponibles.

Ici, on mettra en œuvre les multiplications d'une couche avant celle d'une autre couche qui la précède dans le réseau (on traite en priorité les couches les plus éloignées de l'entrée du réseau), dans la mesure où les valeurs nécessaires sont disponibles pour mettre en œuvre les multiplications et où il n'y a pas d'autres sous-matrices prêtes de la même matrice réorganisée qui doit être traitée selon l'ordre donné.

Selon un mode de mise en œuvre particulier, si la couche est une couche convolutive, ladite division de la matrice réorganisée est définie par une première liste ordonnée de valeurs aléatoires (une ou plusieurs) de nombres de colonnes des sous-matrices, et par une deuxième liste ordonnée de valeurs par exemple aléatoires (une ou plusieurs) de nombre de lignes des sous-matrices, de sorte qu'en parcourant la matrice réorganisée horizontalement (c'est-à-dire de gauche à droite, ou de droite à gauche), les sous-matrices contiguës ou chevauchantes successives ont des nombres de colonnes qui sont ceux de la première liste ordonnée, et en parcourant la matrice réorganisée verticalement (c'est-à-dire de haut en bas, ou de bas en haut), les sous-matrices contiguës ou chevauchantes successives ont des nombres de lignes qui sont ceux de la deuxième liste ordonnée.

La personne du métier saura choisir une technique pour élaborer des valeurs aléatoires. Cette élaboration est mise en œuvre préalablement au traitements des données et en particulier préalablement aux exécutions aléatoires.

En utilisant des tailles aléatoires, on rend encore plus difficile la mise en œuvre d'attaques par canal auxiliaire visant à déterminer la structure du réseau de neurones.

L'utilisation des deux listes ordonnées a pour effet que pour chaque sous matrice, des lignes de sous-matrice ayant toutes la même hauteur sont obtenues, et des colonnes de sous-matrice ayant toute la même largeur sont obtenues.

Préférentiellement, le nombre de valeurs dans chaque liste est lié à la taille de la matrice réorganisée. Par exemple, la somme des largeurs de la première liste est égale à la largeur de la matrice réorganisée, et la somme des hauteurs de la deuxième liste est égale à la hauteur de la matrice réorganisée.

Des chevauchements sont néanmoins possibles entre les sous-matrices, par exemple d'un pas de chevauchement horizontal et/ou vertical donné. Appliquer ce chevauchement peut être mis en œuvre après l'élaboration de la liste.

Selon un mode de mise en œuvre particulier, les valeurs de la première liste ordonnée et les valeurs de la deuxième liste ordonnée sont toutes supérieures à 32 et/ou multiples de 32. De préférence, ces valeurs sont des multiples de 32, dans la mesure où la largeur et la hauteur de la matrice réorganisée autorisent ces valeurs.

Ces valeurs permettent de mettre en œuvre des multiplications de manière optimale, en utilisant des algorithmes proches de GeMM.

**Selon** un mode de mise en œuvre particulier, si la couche est une couche de mise en commun (« pooling »), la division de la matrice réorganisée est définie par une liste ordonnée de valeurs aléatoires de nombres de colonnes des sous-matrices, de sorte qu'en parcourant la matrice réorganisée horizontalement (c'est-à-dire de gauche à droite, ou de droite à gauche), les sous-matrices contiguës ou chevauchantes successives ont des nombres de colonnes qui sont ceux de la première liste ordonnée.

Il a été observé par les inventeurs que les couches de pooling sont associées à des hauteurs de matrices réorganisées trop faibles pour qu'une division dans le sens de la hauteur soit envisageable. En fait, la taille d'un champ récepteur pour une couche de pooling est généralement faible, en particulier parce que la profondeur n'est pas utilisée dans le champ récepteur mais est traitée par des champs récepteurs différents. C'est pour cette raison qu'une division de la matrice réorganisée en une unique ligne de sous-matrices est envisageable..

Selon un mode de mise en œuvre particulier, pour au moins une couche convolutive, préalablement à l'exécution groupée des opérations individuelles d'au moins un groupe de valeurs d'entrée, on met en œuvre une complétion par des zéros (« zero padding » en anglais) pour augmenter la taille du groupe de sorte que la taille de la sous-matrice correspondant à ce groupe augmente.

Cette complétion par des zéros permet de mettre en œuvre des opérations individuelles factices, qui vont rendre encore plus difficile la mise en œuvre d'attaques par canal auxiliaire, car des opérations individuelles réalisées ne reflètent pas la structure réelle de la matrice réorganisée (ou de la couche).

En outre, la complétion par des zéros permet d'obtenir des sous-matrices ayant des dimensions qui sont des multiples de 32.

Selon un mode de mise en œuvre particulier, on utilise un tableau dans lequel on stocke tous les résultats des opérations individuelles (par exemple des multiplications pour une couche convolutive).

Ce mode de mise en œuvre particulier permet de mettre en œuvre simplement les opérations individuelles à un premier instant et d'utiliser ces valeurs à un deuxième instant.

On notera que les valeurs de ce tableau peuvent être des accumulateurs pour les couches convolutives dans lesquels on additionne toutes les nouvelles multiplications réalisées.

On peut noter que ce tableau peut comporter des sous-tableaux dans lesquels les résultats des opérations individuelles qui ont déjà été utilisés sont effacés pour recevoir de nouveaux résultats. Ainsi, on limite la quantité de mémoire nécessaire pour traiter les données. Ces sous-tableaux peuvent correspondre chacun à une couche, ou, selon une alternative, on peut diviser le tableau en sous-tableaux ayant tous la même taille, cette taille étant indépendante des dimensions des couches. On notera que cette alternative est avantageuse car elle rend plus difficiles les attaques par canaux cachés dans lesquelles les adresses mémoires sont surveillées.

Selon un mode de mise en œuvre particulier, on utilise un compteur propre à chaque sous-matrice au moyen duquel on compte le nombre de valeurs disponibles.

Lorsque ce compteur propre à chaque sous-matrice (un compteur par sous-matrice) atteint un maximum égal au nombre de valeurs pour la sous-matrice, on peut mettre en œuvre une exécution groupée (en respectant l'ordre de calcul donné).

Selon un mode de mise en œuvre particulier, on utilise un compteur propre à chaque neurone au moyen duquel on compte le nombre d'opérations individuelles effectuées pour ce neurone.

On peut noter que pour une couche convolutive, si une opération individuelle est une multiplication et les additions pour une colonne de sous-matrice, alors ce compteur atteint son maximum lorsqu'il a atteint une valeur égale au nombre de sous-matrices agencées en colonne dans la matrice réorganisée.

Selon un mode de mise en œuvre particulier, si la couche est une couche convolutive, on mémorise dans un tableau les adresses des valeurs de chaque filtre utilisable dans les opérations individuelles de chaque sous-matrice.

Ces adresses peuvent être des indices indiquant des positions dans un tableau. En particulier, les valeurs de chaque filtre peuvent être lues dans une ligne de filtre (par exemple un tableau) et les positions dans cette ligne/ce tableau sont elles-mêmes mémorisées dans un tableau. En fait, une adresse peut indiquer la première valeur de chaque filtre utilisable pour les opérations individuelles de chaque sous-matrice.

On notera que dans ce cas, une ligne de filtre peut être une ligne de filtre telle que celles utilisées dans l'algorithme GeMM.

Selon un mode de mise en œuvre particulier, le procédé comporte l'obtention desdits groupes de valeurs d'entrée.

Cette étape peut comporter l'identification des valeurs d'entrée qui vérifient les conditions d'appartenance à des sous-matrices de matrices réorganisée, ces sous-matrices étant des extraits résultant d'une division de matrices réorganisées, chaque matrice réorganisée étant associée à un tenseur de valeurs d'entrée et dans laquelle chaque colonne correspond à un champ récepteur de valeurs d'entrée du tenseur de valeurs d'entrée de la couche et chaque ligne de cette colonne correspond à une valeur dudit champ récepteur de valeurs d'entrée, la division de la matrice réorganisée étant configurée pour diviser la matrice réorganisée en une pluralité de sous-matrices contiguës ou chevauchantes ayant des largeurs aléatoires et des hauteurs données.

L'identification des valeurs d'entrée peut utiliser des adresses où seront stockées les valeurs d'entrée et/ou utiliser une liste ordonnée de nombres de colonnes des sous-matrices et/ou utiliser une liste ordonnée de nombres de lignes des sous-matrices. Si l'on utilise des listes ordonnées de colonnes ou de lignes, on pourra déduire lesdites adresses de ces listes.

Selon un mode de mise en œuvre particulier, pour au moins une couche, l'obtention d'un desdits groupes de valeurs d'entrée est mise en œuvre lorsque le compteur propre à la sous-matrice correspondant audit un des groupes de valeur d'entrée, atteint un maximum égal au nombre de valeurs de la sous-matrice.

L'invention propose également un procédé de préparation d'un réseau de neurones artificiels configuré pour traiter des données de manière sécurisée selon la revendication 13.

Ce procédé peut permettre d'obtenir un réseau de neurones artificiels utilisables dans tous les modes de mise en œuvre du procédé de traitement de données tel que décrit ci-avant.

Ce procédé peut également être mis en œuvre par un système informatique (par exemple un ordinateur).

Il évite également une attaque par canal auxiliaire.

Dans ce procédé, on ne traite pas de données au moyen du réseau de neurones artificiels, mais on le prépare pour un traitement ultérieur.

Selon un mode de mise en œuvre particulier, ce procédé comporte, pour chaque couche des plusieurs couches successives, une obtention d'une matrice réorganisée associée au tenseur de valeurs d'entrée de la couche, dans laquelle chaque colonne correspond à un champ récepteur de valeurs d'entrée du tenseur de valeurs d'entrée de la couche et chaque ligne de cette colonne correspond à une valeur dudit champ récepteur de valeurs d'entrée,
une division de la matrice réorganisée en une pluralité de sous-matrices contiguës ou chevauchantes ayant des largeurs aléatoires et des hauteurs données, chaque sous-matrice comprenant des groupes de valeurs d'entrée du tenseur de valeur d'entrée.

L'invention propose également un système informatique de traitement sécurisé de données par un réseau de neurones artificiels du système selon la revendication 15.

Ce système peut être configuré pour mettre en œuvre tous les modes de mise en œuvre du procédé tel que défini ci-avant.

En particulier, ce système peut mettre en œuvre l'obtention des groupes de valeurs d'entrée.

L'invention propose également un système de préparation d'un réseau de neurones artificiels configuré pour traiter des données de manière sécurisée selon la revendication 16.

Ce système permet d'obtenir des réseaux de neurones artificiels utilisables dans tous les modes de mise en œuvre du procédé de traitement de donnée défini ci-avant.

On peut noter que ce système ne met pas en œuvre de traitement de données, mais uniquement la préparation.

L'invention propose également un programme d'ordinateur comportant des instructions pour l'exécution des étapes d'un procédé de traitement de données tel que défini ci-avant lorsque ledit programme est exécuté par un ordinateur et un programme d'ordinateur comportant des instructions pour l'exécution des étapes d'un procédé de préparation d'un réseau de neurones tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé de traitement de données tel que défini ci-avant et un support d'enregistrement lisible par un ordinateur sur lequel est enregistré un programme d'ordinateur comprenant des instructions pour l'exécution des étapes d'un procédé de préparation d'un réseau de neurones tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, une mémoire non-volatile réinscriptible, par exemple de type FLASH ou EEPROM, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

On notera que le réseau de neurones artificiel, lesdites matrices et sous-matrices, peuvent être mémorisés dans le support d'enregistrement.

### Brève description des dessins

D'autres caractéristiques et avantages de la présente invention ressortiront de la description faite ci-dessous, en référence aux dessins annexés qui en illustrent un exemple dépourvu de tous caractères limitatifs.

Sur les figures :
[Fig. 1] La figure 1, déjà décrite, est une illustration d'une couche convolutive.
[Fig. 2] La figure 2 est une illustration d'une mise en œuvre de l'invention.
[Fig. 3] La figure 3 est une autre illustration d'une mise en œuvre de l'invention.
[Fig. 4] La figure 4 est un exemple dans lequel on met en œuvre une complétion par des zéros.
[Fig. 5] La figure 5 est une représentation schématique des étapes d'un procédé selon un exemple
[Fig. 6] La figure 6 est une représentation schématique d'un système selon un exemple.

### Description détaillée d'un mode de réalisation

On va maintenant décrire un procédé et un système de traitement par un réseau de neurones artificiels qui comprend plusieurs couches successives de mise en commun ou convolutives. On va également décrire l'obtention des réseaux de neurones artificiels qui seront utilisés.

Dans les exemples décrits ci-après et pour plus de simplicité, on utilise des matrices de petites dimensions plutôt que des tenseurs. L'invention s'applique néanmoins au traitement de données sous la forme de tenseurs (par exemple des images RGB).

Le traitement de données est mis en œuvre de manière à éviter une attaque par canal auxiliaire par exemple une attaque du type de celle décrite dans le document antérieur « Cache telepathy : Leveraging shared resource attacks to learn dnn architectures ».

Pour éviter les attaques, les procédés et systèmes décrits ci-après changent l'ordre dans lequel les calculs individuels (en particulier les multiplications) de chaque couche sont exécutés, en respectant une division en partie aléatoire des matrices intermédiaires utilisées à des fins de calcul appelées matrices réorganisées en une pluralité de sous-matrices, pour ensuite mettre en œuvre les calculs individuels de manière groupée.

Par exemple, pour une couche convolutive, un calcul individuel est une multiplication ou, de manière alternative, la combinaison des multiplications et des additions pour les valeurs d'une colonne de sous-matrice.

Sur la figure 2, on a représenté une matrice d'entrée M d'une couche convolutive. Cette matrice d'entrée peut être obtenue après un traitement par une couche convolutive qui la précède dans un réseau de neurones convolutifs. En fait, chaque valeur dans la matrice est ici le résultat d'une convolution et est associée à un neurone.

Pour mettre en œuvre le procédé selon l'invention, on réorganise la matrice M de valeurs d'entrée en une matrice RM pour la couche convolutive concernée, dans laquelle le champ récepteur de chaque neurone couvre 3x3 valeurs de la matrice M, et le décalage du champ récepteur est de 1 (verticalement et horizontalement). Cette opération est mise en œuvre d'une manière connue en soi car utilisée dans l'algorithme GeMM.

Sur cette figure, 4 champs récepteurs sont désignés par les références RCA, RCB, RCC, et RCD. Dans la matrice réorganisée, les champs récepteurs RCA, RCB, RCC, et RCD correspondent respectivement aux colonnes CA, CB, CC, et CD. On voit sur cette figure le décalage du champ récepteur de 1 entre les les champs récepteurs RCA, RCB, RCC, et RCD.

On peut noter que lorsque le neurone N de la matrice M a été calculé pour devenir une valeur d'entrée disponible par une opération de convolution (si la couche qui précède est une couche convolutive), sa valeur est disponible, et elle peut être utilisée dans les quatre colonnes CA, CB, CC, et CD.

On peut en outre suivre la disponibilité des valeurs avec un compteur associé à chaque neurone de la matrice RM pour déclencher lele calcul d'un neurone associé à la colonne et au champ récepteur associé (à titre indicatif, si la couche a une profondeur, on peut déclencher plusieurs calculs de neurones associés à la colonne).

Par contre, dans l'invention, les opérations individuelles (les multiplications, ou les multiplications et les additions pour une couche convolutive) pour la matrice réorganisée sont exécutées de manière groupée pour chaque sous-matrice.

Sur la figure, on a représenté deux sous-matrices BA et BB. On voit que le neurone N apparait dans ces deux sous-matrices. On peut utiliser un compteur propre à chaque sous-matrice pour déclencher l'exécution groupée lorsque le compteur indique que toutes les valeurs de la sous-matrice sont disponibles (on incrémente ce compteur à chaque fois qu'une nouvelle valeur est disponible dans la sous matrice associée).

On notera que les sous-matrices BA et BB ne se chevauchent pas mais que cela reste possible.

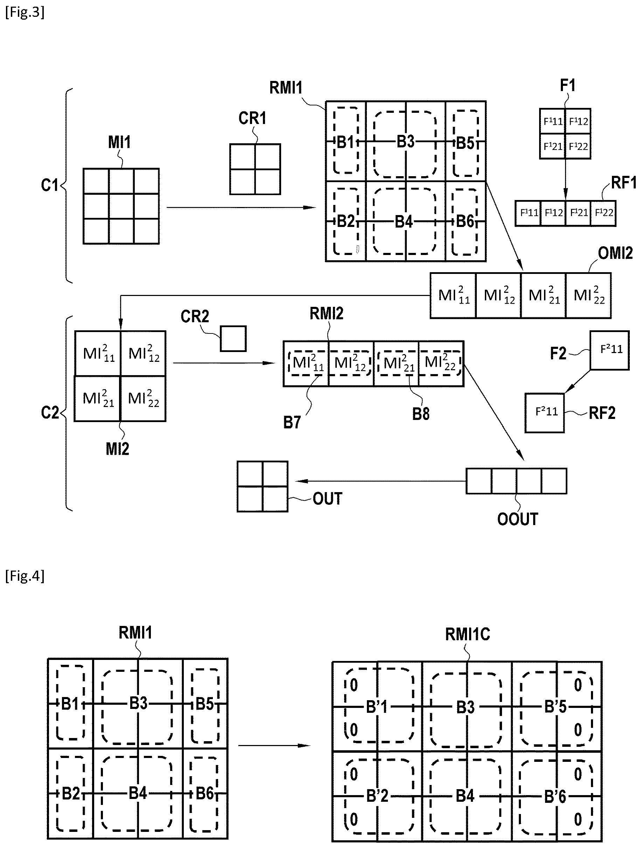

La division en sous-matrices sera décrite plus en détails en référence à la figure 3.

Sur la figure 3, on a représenté un traitement par un réseau de neurones artificiels convolutif comportant deux couches : une couche convolutive C1 de 4 neurones OMI2 et un filtre F1 de taille 2x2, et une couche convolutive C2 de 4 neurones OOUT et un filtre F2 de taille 1x1. L'entrée du réseau de neurones est une image MI1 de taille 3x3x1 (la profondeur est de 1, par exemple l'entrée est une image monochrome).

Sur cette figure, la référence C1 désigne la première couche, c'est-à-dire l'application de filtres à une matrice de valeur d'entrée, et la référence C2 désigne la deuxième couche, c'est-à-dire l'application de filtres à la matrice qui contient les neurones calculés par la première couche.

Pour mettre en œuvre l'invention, on va utiliser des matrices réorganisées avec des sous-matrices élaborées préalablement ou, de manière alternative, lorsqu'elles seront utilisées (par exemple lorsqu'une valeur de sous-matrice est disponible, on identifie les valeurs qui appartiendront à la sous-matrice). En outre, on va utiliser les éléments suivants :
- ACC : un tableau dans lequel on stocke tous les résultats des opérations individuelles (plus précisément, ici les multiplications et additions pour les valeurs de chaque colonnes de sous-matrices) ;
- B_C : un compteur propre à chaque sous-matrice au moyen duquel on compte le nombre de valeurs disponibles ;
- C_C :un compteur propre à chaque neurone au moyen duquel on compte le nombre d'opérations individuelles effectuées pour ce neurone ; et
- I_B : un tableau dans lequel on mémorise les adresses (ici des indices) des sous-filtres (la portion d'un filtre d'intérêt pour une sous-matrice) utilisable dans les opérations individuelles de chaque sous-matrice.

Ici, le tableau ACC comporte 17 valeurs (3x3+2*2+2*2) . En fait, il y a 3x3 valeurs chacune associée à l'une des données d'entrée (l'image d'entrée MI1 est de taille 3x3x1), il y a 2x2 valeurs chacune associée à l'un des 4 neurones de sortie de la couche C1 (c'est à dire les 4 neurones de OMI2), et il y a 2x2 valeurs chacune associée à l'un des 4 neurones de sortie de la couche C2 (c'est-à-dire les 4 neurones de sortie de OOUT).

On a aussi 17 compteurs C_C. Un pour chaque élément du tableau ACC. Les compteurs C_C associés aux 9 premières valeurs du tableau ACC peuvent être remplis avec une valeur indiquant que toutes les opérations individuelles ont été effectuées pour calculer ces neurones, par exemple avec la valeur 3 s'il est considéré qu'il faut 3 opérations individuelles pour que ces neurones soient disponibles.

Sur la figure, on a représenté la matrice d'entrée MI1 et sa forme réorganisée RMI1 pour la couche convolutive C1. La matrice réorganisée RMI1 comporte 4 colonnes (il y a quatre champs récepteurs ici) de 4 valeurs (les neurones de la couche C1 ont un champ récepteur CR1 de 2x2 valeurs, et le tenseur d'entrée a une profondeur de 1).

Pour mettre en œuvre une division de la matrice réorganisée RMI1, on obtient deux listes ordonnées de valeurs aléatoires :
- L11 : {1, 2, 1}, et
- L12 : {2, 2}.

La liste L11 content des valeurs aléatoires de nombres de colonnes pour des sous-matrices et la liste L12 contient des valeurs aléatoires de nombres de lignes pour des sous-matrices, ces sous-matrices résultant de la division de la matrice réorganisée RMI1.

On pourra utiliser toute méthode de génération de nombres aléatoires, et ce en utilisant des contraintes comme par exemple une vérification de la somme des nombres de colonnes qui ne doit pas dépasser le nombre de colonnes de la matrice réorganisée RMI1, et une vérification de la somme des nombres de lignes qui ne doit pas dépasser le nombre de lignes de la matrice réorganisée RMI1.

Dans la matrice RMI1, on aura donc horizontalement, ici de gauche à droite (cet ordre de lecture étant fixé préalablement), et sur une même ligne, une sous-matrice ayant une largeur d'une colonne, une sous-matrice ayant une largeur de deux colonnes, et une sous-matrice ayant une largeur d'une colonne. On a également, sur une même colonne, verticalement et ici de haut en bas (cet ordre de lecture étant fixé préalablement) une sous-matrice ayant une hauteur de deux lignes, et une sous-matrice ayant une hauteur de deux lignes. La division obtenue est représentée sur la figure, de haut en bas puis de gauche à droite (c'est l'ordre donné associé à cette division en sous-matrices), avec une représentation de la sous-matrice B1 (1x2), de la sous-matrice B2 (1x2), de la sous-matrice B3 (2x2), de la sous-matrice B4 (2x2), de la sous-matrice B5 (1x2), et de la sous-matrice B6 (1x2).

Pour cette division, on aura également six compteurs B_C, un pour chaque sous-matrice, qui vont compter le nombre de valeurs disponibles dans chaque sous-matrice et peuvent déclencher l'exécution groupée des opérations individuelles à effectuer pour chaque sous-matrice. Par exemple, pour la sous matrice B3, ce compteur compte les valeurs jusqu'à atteindre 4, et l'exécution groupée des opérations individuelles à effectuer pour cette sous-matrice peut être déclenchée si le compteur a atteint la valeur 4

Le filtre F1 de la couche convolutive C1 est réorganisé comme une matrice de filtre RF1 utilisée dans l'algorithme GeMM déjà décrit. Le filtre F1 est donc présenté sous la forme d'une matrice de filtre RF1 de taille 1x4. On détermine alors la position dans cette matrice filtre des filtres qui sont à utiliser pour les sous-matrices. On pourra ensuite multiplier les sous-matrices par les filtres de la matrice RF1 dont la largeur est égale à la hauteur de la sous-matrice

En fait, pour la matrice RMI1, on pourra mémoriser dans un tableau les adresses des valeurs de filtre utilisable dans les opérations individuelles de chaque sous-matrice (c'est-à-dire des valeurs de la matrice de filtre RF1 par lesquelles on va multiplier les valeurs dans les sous-matrices). Ce tableau indique le premier élément du filtre à utiliser dans la multiplication d'une sous-matrice par une partie de la matrice de filtre RF1. Sur la figure, on a identifié les valeurs du filtre F1, et donc de la matrice de filtre RF1, par les références F¹11, F¹12, F¹21, et F¹22. Le tableau pourra contenir l'indice 0 et l'indice 2 pour indiquer que l'on va utiliser pour chaque sous-matrice située en haut, lors de l'exécution groupée, les valeurs F¹11 et F¹12 (qui commencent à l'indice 0 dans la matrice de filtre RF1) seront donc utilisées. Pour chaque sous-matrice située en bas, lors de l'exécution groupée les valeurs F¹21 et F¹22 (qui commencent à l'indice 2 dans la matrice de filtre RF1) seront donc utilisées.

Pour chaque neurone MI²₁₁, MI²₁₂, MI²₂₁, MI²₂₂ (associés respectivement au filtre de la couche F1), on aura un compteur C_C qui, lorsqu'il atteint la valeur 2, indique que le calcul du neurone associé est terminé (puisque chaque colonne de la matrice réorganisée RM1 est ici divisée en deux sous-matrices. Le calcul de chaque neurone de la couche de convolution C1 requiert donc deux exécutions groupées des opérations individuelles : une pour chacune des 2 sous matrices contenant la colonne associée au neurone). On obtient ainsi les valeurs de neurones de la première couche MI²₁₁, MI²₁₂, MI²₂₁, MI²₂₂.

Dans la matrice réorganisée RMI1, toutes les valeurs sont déjà disponibles puisqu'elles proviennent de l'entrée, cela peut apparaître dans les compteurs B_C.

Le traitement des données est ensuite mis en œuvre de la manière suivante. On parcourt la matrice RMI1 sous-matrice par sous-matrice dans l'ordre qui va de B1 à B6, en exécutant de manière groupée les multiplications de chaque sous-matrice.

Pour la sous-matrice B1, on multiplie une portion de la matrice RF1 qui commence à l'indice 0 avec la colonne de la sous matrice B1.. A ce stade, le compteur C_C du premier neurone de la couche C1 (MI²₁₁) prend la valeur 1. Pour la sous-matrice B2, on multiplie une portion de la matrice RF1 qui commence à l'indice 2 avec la colonne de la sous matrice B2. A ce stade, le compteur C_C du premier neurone de la couche C1 est incrémenté de 1 et prend la valeur 2.

Par ces multiplications et en utilisant l'accumulateur ACC associé au neurome MI²₁₁, on peut obtenir la valeur du neurone MI²₁₁.

Une valeur de neurone devient donc disponible dans la deuxième matrice d'entrée MI2 représentée sur la figure et obtenue à partir de OMI2, qui peut être réorganisée en la matrice RMI2. Ce premier calcul de neurone rend disponible la première valeur (celle a gauche dans la matrice RMI2).

On peut noter qu'ici, on a utilisé un champ récepteur de 1x1 valeur désigné par la référence CR2 pour réorganiser la matrice MI2 en la matrice RMI2.

La division de la matrice réorganisée RMI2 peut se faire avec les deux listes ordonnées de valeurs aléatoires suivantes :
- L21 : {2,2}, et
- L22 : {1, 1}.

Les deux sous-matrices B7 et B8 sont référencées sur la figure. Ici, dans le bloc B7, on a une valeur, ce qui est inférieur aux deux attendues (compteur B_C), et il est donc nécessaire de retourner sur le traitement de RMI1.

On peut alors traiter la sous-matrice B3, puis la sous-matrice B4. A cet effet, le tableau I_B peut être utilisé pour retrouver les indices des valeurs de RF1à utiliser.

On peut noter qu'après les mises en œuvre des calculs groupés des sous-matrices B3 et B4, deux autres neurones de la couche C1 MI²₁₂ et MI²₂₁, c'est à dire deux autres valeurs de la matrice MI2 sont disponibles (compteurs C_C). Cette fois ci, B7 a toutes ses valeurs disponibles (compteur B_C), et on peut mettre en œuvre les multiplications qui lui sont associées. Ces multiplications sont prioritaires sur celles des sous-matrices B5 et B6 car la couche C2 est plus éloignée de l'entrée du réseau de neurones. Ce mode de mise en œuvre est avantageux car il mélange les calculs de couches différentes.

La matrice de sortie OUT (2x2) commence ainsi à se remplir avec deux valeurs (en passant par la matrice de sortie OOUT).

Le procédé continue jusqu'à ce que toutes les valeurs de la matrice de sortie OUT ait ses quatre valeurs disponibles.

La figure 4 est une représentation d'une étape optionnelle de complétion par des zéros.

En partant de la matrice réorganisée RMI1 décrite ci-avant en référence à la figure 3, on peut modifier toutes les sous-matrices de sorte qu'elles ont toute une taille de 2x2 pour obtenir les sous-matrices B'1, B'2, B3 (B3 n'a pas été modifiée et l'on conserve la même référence), B4 (B4 n'a pas été modifiée et l'on conserve la même référence), B'5, et B'6. On obtient ainsi la matrice réorganisée complétée RMI1C.

Comme on le conçoit, l'emplacement dans les sous-matrices des zéros importe peu dès lors que l'on multiplie les valeurs qui étaient présentes dans la matrice RMI1 par les bonnes valeurs de filtre. Le traitement par la couche C1 sera analogue à celui décrit ci-avant et les résultats obtenus ne seront pas affectés par la présence des zéros. Par contre, en cas d'attaque par canal auxiliaire, des multiplications supplémentaires seront observées alors qu'elles ne reflètent pas la structure de la couche C1.

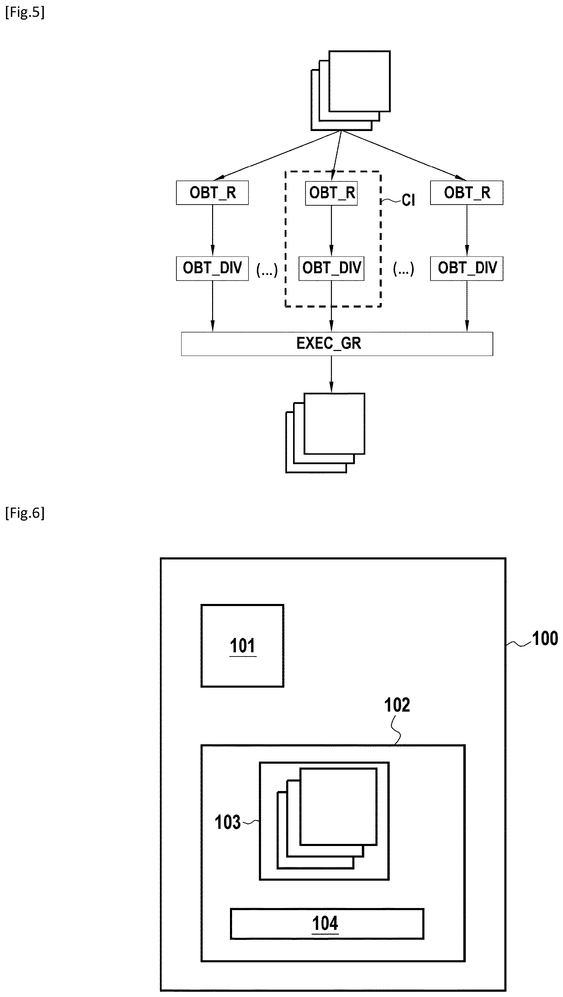

La figure 5 est une représentation schématique d'un procédé de préparation d'un réseau de neurones artificiels pour obtenir par exemple le réseau représenté à la figure 3. Ici, le réseau comprend plusieurs couches successives de mise en commun ou convolutives toutes associées à des matrices de neurones, chaque neurone étant associé à un champ récepteur de valeurs d'entrées appartenant à une matrice de valeurs d'entrée.

Pour ce procédé, on montre les obtentions des matrices réorganisées et des sous-matrices. Cela n'est présenté qu'à titre indicatif car il est envisageable d'identifier les valeurs qui forment ces matrices réorganisées/sous-matrices par leurs adresses, sans passer par l'élaboration des matrices réorganisées et des sous-matrices. En fait, cela correspond à identifier des valeurs (par exemple en utilisant leurs adresses et/ou en utilisant uneliste ordonnée de nombres de colonnes des sous-matrices et/ou en utilisant une liste ordonnée de nombres de lignes des sous-matrices) de sorte que ces valeurs puissent former les sous-matrices et les matrices réorganisées.

Ici, on va traiter toutes les couches du réseau de neurones artificiels avec les même étapes. Par exemple, pour la couche CI, on met en œuvre :
- une obtention OBT_R d'une matrice réorganisée associée au tenseur de valeurs d'entrée de la couche, dans laquelle chaque colonne correspond à un champ récepteur de valeurs d'entrée du tenseur de valeurs d'entrée de la couche et chaque ligne de cette colonne correspond à une valeur dudit champ récepteur de valeurs d'entrée,
- une division (OBT_DIV) de la matrice réorganisée en une pluralité de sous-matrices contiguës ou chevauchantes ayant des largeurs aléatoires et des hauteurs données, chaque sous-matrice comprenant des groupes de valeurs d'entrée du tenseur de valeur d'entrée,
- le réseau de neurones artificiels étant configuré (EXEC_GR) pour exécuter de manière groupée des opérations individuelles permettant d'obtenir les valeurs de neurones des plusieurs couches successives, chaque exécution groupée comprenant les opérations individuelles sur un groupe de valeurs d'une desdites sous-matrices, les exécutions groupées étant mises en œuvre selon :
- une disponibilité des valeurs des sous-matrices de chaque exécution groupée,
- un ordre d'exécution donné des sous-matrices d'une même couche si les valeurs de plusieurs sous-matrices sont disponibles,
et, si toutes les opérations individuelles d'une colonne d'une matrice réorganisée ont été exécutées, on obtient la valeur d'un ou de plusieurs neurones correspondant au champ récepteur de la colonne..

On obtient alors une nouvelle implémentation du réseau de neurones artificiels.

La figure 6 est une représentation schématique d'un système informatique 100 configuré pour mettre en œuvre le procédé représenté à la figure 5.

Le système informatique 100 est un système de préparation d'un réseau de neurones artificiels.

Pour mettre en œuvre ce procédé, le système 100 comporte un processeur 101 sur lequel des instructions de programme d'ordinateur stockées dans une mémoire non-volatile 102 peuvent être exécutées.

Dans cette mémoire non-volatile, le réseau de neurones artificiels 103 est mémorisé. Ce réseau comprend plusieurs couches successives de mise en commun ou de convolution toutes associées à des matrices de neurones, chaque neurone étant associé à un champ récepteur de valeurs d'entrées appartenant à une matrice de valeurs d'entrée.

Aussi, dans la mémoire non-volatile 102, on a mémorisé des instructions 104 pour préparer le réseau de neurones artificiels 103 et obtenir une implémentation telle qu'obtenue à l'issue du procédé décrit en référence à la figure 5.

Les systèmes et procédés décrits ci-avant rendent plus difficile la mise en œuvre d'attaques par canal auxiliaire.

Ils permettent donc d'utiliser les réseaux de neurones artificiels pour des traitements de données dans le domaine de la sécurité (par exemple lorsque les données sont des images, éventuellement pour l'authentification de documents ou de personnes).

## Revendications

1. Procédé de traitement de données par un réseau de neurones artificiels, le procédé étant mis en œuvre par un système informatique (100), le réseau de neurones artificiels comprenant plusieurs couches (L1, L2) successives de neurones (N11, N) de mise en commun ou convolutives (C1, C2) toutes associées à des tenseurs (MI1) de valeurs d'entrées desdites couches, chaque neurone étant associé à un champ récepteur (RCA, RCA) de valeurs d'entrées appartenant à un tenseur (MI1, MI2) de valeurs d'entrée de la couche dudit neurone, le traitement comprenant :
des exécutions groupées (EXEC_GR) d'opérations individuelles permettant d'obtenir les valeurs de neurones des plusieurs couches successives, chaque exécution groupée comprenant des opérations individuelles sur un groupe de valeurs d'entrée d'un tenseur de valeurs d'entrées, les valeurs de ce groupe de valeurs étant choisies pour correspondre à une sous-matrice associée à cette exécution groupée, cette sous-matrice étant un extrait résultant d'une division d'une matrice dite matrice réorganisée (RMI1), associée à ce tenseur de valeurs d'entrée et dans laquelle chaque colonne (CA, CB, CC, CD) correspond à un champ récepteur (RCA, RCB, RCC, RCD) de valeurs d'entrée du tenseur de valeurs d'entrée de la couche et chaque ligne de cette colonne correspond à une valeur dudit champ récepteur de valeurs d'entrée,
la division de la matrice réorganisée étant configurée pour diviser la matrice réorganisée en une pluralité de sous-matrices (B1, ..., B6) contiguës ou chevauchantes ayant des largeurs aléatoires et des hauteurs données, et
les exécutions groupées (EXEC_GR) étant mises en œuvre selon :
- une disponibilité des valeurs des sous-matrices de chaque exécution groupée,
- un ordre d'exécution donné des sous-matrices d'une même couche si les valeurs de plusieurs sous-matrices sont disponibles,
et, si toutes les opérations individuelles d'une colonne d'une matrice réorganisée ont été exécutées, on obtient la valeur d'un ou de plusieurs neurones correspondant au champ récepteur de la colon ne.

2. Procédé selon la revendication 1, dans lequel les exécutions groupées sont en outre mises en œuvre selon :
un ordre d'exécution des sous-matrices de couches différentes dans lequel on traite en priorité une sous-matrice d'une première couche par rapport à une sous-matrice d'une deuxième couche si les valeurs de ces sous-matrices sont disponibles et si la première couche est plus éloignée de l'entrée du réseau de neurones artificiels que la deuxième couche.

3. Procédé selon la revendication 1 ou 2, dans lequel si la couche est une couche convolutive, ladite division de la matrice réorganisée est définie par une première liste (L11, L21) ordonnée de valeurs aléatoires de nombres de colonnes des sous-matrices, et par une deuxième liste (L12, L22) ordonnée de valeurs par exemple aléatoires de nombre de lignes des sous-matrices, de sorte qu'en parcourant la matrice réorganisée horizontalement, les sous-matrices contiguës voire chevauchantes successives ont des nombres de colonnes qui sont ceux de la première liste ordonnée, et en parcourant la matrice réorganisée verticalement, les sous-matrices contiguës ou chevauchantes successives ont des nombres de lignes qui sont ceux de la deuxième liste ordonnée.

4. Procédé selon la revendication 3, dans lequel les valeurs de la première liste ordonnée et les valeurs de la deuxième liste ordonnée sont toutes supérieures à 32 et/ou multiples de 32.

5. Procédé selon l'une quelconque des revendications 1 à 4, dans lequel si la couche est une couche de mise en commun, la division de la matrice réorganisée est définie par une liste ordonnée de valeurs aléatoires de nombres de colonnes des sous-matrices, de sorte qu'en parcourant la matrice réorganisée horizontalement, les sous-matrices contiguës ou chevauchantes successives ont des nombres de colonnes qui sont ceux de la première liste ordonnée.

6. Procédé selon l'une quelconque des revendications 1 à 5, dans lequel pour au moins une couche convolutive, préalablement à l'exécution groupée des opérations individuelles d'au moins un groupe de valeurs d'entrée, on met en œuvre une complétion par des zéros pour augmenter la taille du groupe de sorte que la taille de la sous-matrice correspondant à ce groupe augmente.

7. Procédé selon l'une quelconque des revendications 1 à 6, dans lequel on utilise un tableau dans lequel on stocke tous les résultats des opérations individuelles.

8. Procédé selon l'une quelconque des revendications 1 à 7, dans lequel on utilise un compteur (B_C) propre à chaque sous-matrice au moyen duquel on compte le nombre de valeurs disponibles.

9. Procédé selon l'une quelconque des revendications 1 à 8, dans lequel on utilise un compteur (C_C) propre à chaque neurone au moyen duquel on compte le nombre d'opérations individuelles effectuées pour ce neurone.

10. Procédé selon l'une quelconque des revendications 1 à 9, dans lequel si la couche est une couche convolutive, on mémorise dans un tableau (I_B) les adresses des valeurs de chaque filtre utilisable dans les opérations individuelles de chaque sous-matrice.

11. Procédé selon l'une quelconque des revendications 1 à 10, comportant l'obtention desdits groupes de valeurs d'entrée.

12. Procédé selon les revendications 8 et 11, dans lequel, pour au moins une couche, l'obtention d'un desdits groupes de valeurs d'entrée est mise en œuvre lorsque le compteur propre à la sous-matrice correspondant audit un des groupes de valeur d'entrée, atteint un maximum égal au nombre de valeurs de la sous-matrice.

13. Procédé de préparation d'un réseau de neurones artificiels configuré pour traiter des données, le procédé étant mis en œuvre par un système informatique (100), le réseau de neurones artificiels comprenant plusieurs couches (L1, L2) successives de neurones (N11, N) de mise en commun ou convolutives (C1, C2) toutes associées à des tenseurs (MI1) de valeurs d'entrées desdites couches, chaque neurone étant associé à un champ récepteur de valeurs d'entrées appartenant à un tenseur (MI1, MI2) de valeurs d'entrée de la couche dudit neurone, le procédé de préparation comprenant pour chaque couche des plusieurs couches successives :
l'obtention de groupes de valeurs d'entrée comprenant une identification des valeurs d'entrée qui vérifient les conditions d'appartenance à des sous-matrices (B1, ..., B6) de matrices réorganisées,
ces sous-matrices étant des extraits résultant d'une division de matrices réorganisées (RMI1), chaque matrice réorganisée étant associée à un tenseur de valeurs d'entrée et dans laquelle chaque colonne (CA, CB, CC, CD) correspond à un champ récepteur (RCA, RCB, RCC, RCD) de valeurs d'entrée du tenseur de valeurs d'entrée de la couche et chaque ligne de cette colonne correspond à une valeur dudit champ récepteur de valeurs d'entrée, la division de la matrice réorganisée étant configurée pour diviser la matrice réorganisée en une pluralité de sous-matrices contiguës ou chevauchantes ayant des largeurs aléatoires et des hauteurs données
une configuration du réseau de neurones artificiels pour qu'il exécute de manière groupée (EXEC_GR) des opérations individuelles permettant d'obtenir les valeurs de neurones des plusieurs couches successives, chaque exécution groupée comprenant les opérations individuelles sur un groupe de valeurs d'entrée, les exécutions groupées étant mises en œuvre selon :
- une disponibilité des valeurs des sous-matrices de chaque exécution groupée,
- un ordre d'exécution donné des sous-matrices d'une même couche si les valeurs de plusieurs sous-matrices sont disponibles,
et, si toutes les opérations individuelles d'une colonne d'une matrice réorganisée ont été exécutées, on obtient la valeur d'un ou de plusieurs neurones correspondant au champ récepteur de la colon ne.

14. Procédé selon la revendication 13, comportant pour chaque couche des plusieurs couches successives, une obtention d'une matrice réorganisée associée au tenseur de valeurs d'entrée de la couche, dans laquelle chaque colonne correspond à un champ récepteur de valeurs d'entrée du tenseur de valeurs d'entrée de la couche et chaque ligne de cette colonne correspond à une valeur dudit champ récepteur de valeurs d'entrée, une division de la matrice réorganisée en une pluralité de sous-matrices contiguës ou chevauchantes ayant des largeurs aléatoires et des hauteurs données, chaque sous-matrice comprenant des groupes de valeurs d'entrée du tenseur de valeur d'entrée.

15. Système informatique (100) de traitement sécurisé de données par un réseau de neurones artificiels (103) du système, le réseau comprenant plusieurs couches (L1, L2) successives de neurones (N11, N) de mise en commun ou de convolution toutes associées à des tenseurs (MI1) de valeurs d'entrée desdites couches, chaque neurone étant associé à un champ récepteur (RC1, RCA) de valeurs d'entrées appartenant à un tenseur (MI1, MI2) de valeurs d'entrée de la couche dudit neurone, dans lequel le traitement est implémenté par des exécutions groupées d'opérations individuelles permettant d'obtenir les valeurs de neurones des plusieurs couches successives, chaque exécution groupée comprenant des opérations individuelles sur un groupe de valeurs d'entrée d'un tenseur de valeurs d'entrées, les valeurs de ce groupe de valeurs étant choisies pour correspondre à une sous-matrice associée à cette exécution groupée, cette sous-matrice étant un extrait résultant d'une division d'une matrice dite matrice réorganisée (RMI1), associée à ce tenseur de valeurs d'entrée et dans laquelle chaque colonne (CA, CB, CC, CD) correspond à un champ récepteur (RCA, RCB, RCC, RCD) de valeurs d'entrée du tenseur de valeurs d'entrée de la couche et chaque ligne de cette colonne correspond à une valeur dudit champ récepteur de valeurs d'entrée, la division de la matrice réorganisée étant configurée pour diviser la matrice réorganisée en une pluralité de sous-matrices (B1, ..., B6) contiguës ou chevauchantes ayant des largeurs aléatoires et des hauteurs données, et les exécutions groupées étant mises en œuvre selon :
- une disponibilité des valeurs des sous-matrices de chaque exécution groupée,
- un ordre d'exécution donné des sous-matrices d'une même couche si les valeurs de plusieurs sous-matrices sont disponibles,
et, si toutes les opérations individuelles d'une colonne d'une matrice réorganisée ont été exécutées, on obtient la valeur d'un ou de plusieurs neurones correspondant au champ récepteur de la colon ne.

16. Système informatique (100) de préparation d'un réseau de neurones artificiels configuré pour traiter des données , le réseau comprenant plusieurs couches (L1, L2) successives de neurones (N11, N) de mise en commun ou convolutives (C1, C2) toutes associées à des tenseurs (MI1) de valeurs d'entrée desdites couches, chaque neurone étant associé à un champ récepteur (RC1, RCA) de valeurs d'entrées appartenant à un tenseur (MI1, MI2) de valeurs d'entrée de la couche dudit neurone, le système de préparation comprenant, pour chaque couche des plusieurs couches successives :
un module d'obtention, pour chaque couche des plusieurs couches successives de groupes de valeurs d'entrée comprenant une identification des valeurs d'entrée qui vérifient les conditions d'appartenance à des sous-matrices de matrices réorganisées, ces sous-matrices étant des extraits résultant d'une division de matrices réorganisées, chaque matrice réorganisée étant associée à un tenseur de valeurs d'entrée et dans laquelle chaque colonne (CA, CB, CC,, CD) correspond à un champ récepteur (RCA, RCB, RCC, RCD) de valeurs d'entrée du tenseur de valeurs d'entrée de la couche et chaque ligne de cette colonne correspond à une valeur dudit champ récepteur de valeurs d'entrée, la division de la matrice réorganisée étant configurée pour diviser la matrice réorganisée en une pluralité de sous-matrices contiguës ou chevauchantes ayant des largeurs aléatoires et des hauteurs données, un module de configuration du réseau de neurones artificiels pour qu'il exécute de manière groupée des opérations individuelles permettant d'obtenir les valeurs de neurones des plusieurs couches successives, chaque exécution groupée comprenant les opérations individuelles sur un groupe de valeurs d'entrée, les exécutions groupées étant mises en œuvre selon :
- une disponibilité des valeurs des sous-matrices de chaque exécution groupée,
- un ordre d'exécution donné des sous-matrices d'une même couche si les valeurs de plusieurs sous-matrices sont disponibles,
et, si toutes les opérations individuelles d'une colonne d'une matrice réorganisée ont été exécutées, on obtient la valeur d'un ou de plusieurs neurones correspondant au champ récepteur de la colon ne.

## Patentansprüche

1. Verfahren zur Verarbeitung von Daten durch ein künstliches neuronales Netz, wobei das Verfahren von einem Computersystem (100) durchgeführt wird, wobei das künstliche neuronale Netz mehrere aufeinander folgende Schichten (L1, L2) aus Neuronen (N11, N) zum Pooling oder zur Faltung (C1, C2) umfasst, die alle Tensoren (MI1) von Eingangswerten der Schichten zugeordnet sind, wobei jedes Neuron einem rezeptiven Feld (RCA, RCA) mit Eingangswerten zugeordnet ist, die zu einem Tensor (MI1, MI2) von Eingangswerten der Schicht des Neurons gehören, die Verarbeitung umfassend:
gebündelte Ausführungen (EXEC_GR) von Einzeloperationen, die es ermöglichen, die Werte von Neuronen der mehreren aufeinander folgenden Schichten zu erhalten, wobei jede gebündelte Ausführung Einzeloperationen an einer Gruppe von Eingangswerten eines Tensors von Eingangswerten umfasst, wobei die Werte dieser Gruppe von Werten so ausgewählt sind, dass sie einer dieser gebündelten Ausführung zugeordneten Teilmatrix entsprechen, wobei diese Teilmatrix ein Auszug ist, der aus einer Division einer Matrix, reorganisierte Matrix (RMI1) genannt, resultiert, die diesem Tensor von Eingangswerten zugeordnet ist und in der jede Spalte (CA, CB, CC, CD) einem rezeptiven Feld (RCA, RCB, RCC, RCD) mit Eingangswerten des Tensors von Eingangswerten der Schicht entspricht und jede Zeile dieser Spalte einem Wert des rezeptiven Felds mit Eingangswerten entspricht,
wobei die Division der reorganisierten Matrix dazu ausgestaltet ist, die reorganisierte in eine Mehrzahl von angrenzenden oder überlappenden Teilmatrizen (B1,..., B6) zu dividieren, die zufällige Breiten und gegebene Höhen haben, und
die gebündelten Ausführungen (EXEC_GR) durchgeführt werden gemäß:
- einer Verfügbarkeit der Werte der Teilmatrizen jeder gebündelten Ausführung,
- einer gegebenen Ausführungsreihenfolge der Teilmatrizen einer selben Schicht, wenn die Werte von mehreren Teilmatrizen verfügbar sind,
und, wenn die Einzeloperationen einer Spalte einer reorganisierten Matrix ausgeführt worden sind, man den Wert eines oder mehrerer Neuronen, das bzw. die dem rezeptiven Feld der Spalte entsprechen, erhält.

2. Verfahren nach Anspruch 1, bei dem die gebündelten Ausführungen ferner durchgeführt werden gemäß:
einer Ausführungsreihenfolge der Teilmatrizen von verschiedenen Schichten, in der man vorrangig eine Teilmatrix einer ersten Schicht gegenüber einer Teilmatrix einer zweiten Schicht verarbeitet, wenn die Werte dieser Teilmatrizen verfügbar sind und wenn die erste Schicht weiter von dem Eingang des künstlichen neuronalen Netzes entfernt ist als die zweite Schicht.

3. Verfahren nach Anspruch 1 oder 2, bei dem, wenn die Schicht eine Faltungsschicht ist, die Division der reorganisierten Matrix durch eine erste geordnete Liste (L11, L21) von Zufallswerten von Anzahlen von Spalten der Teilmatrizen und durch eine zweite geordnete Liste (L12, L22) von Werten, zum Beispiel Zufallswerten einer Anzahl von Zeilen der Teilmatrizen definiert wird, so dass beim horizontalen Durchlaufen der reorganisierten Matrix die aufeinander folgenden angrenzenden oder sogar überlappenden Teilmatrizen Anzahlen von Spalten haben, die diejenigen der ersten geordneten Liste sind, und beim vertikalen Durchlaufen der reorganisierten Matrix die aufeinander folgenden angrenzenden oder sogar überlappenden Matrizen Anzahlen von Zeilen haben, die diejenigen der zweiten geordneten Liste sind.

4. Verfahren nach Anspruch 3, bei dem die Werte der ersten geordneten Liste und die Werte der zweiten geordneten Liste alle größer al 32 und/oder Vielfache von 32 sind.

5. Verfahren nach einem der Ansprüche 1 bis 4, bei dem, wenn die Schicht eine Pooling-Schicht ist, die Division der reorganisierten Matrix durch eine geordnete Liste mit Zufallswerten von Anzahlen von Spalten der Teilmatrizen definiert ist, so das beim horizontalen Durchlaufen der reorganisierten Matrix die aufeinander folgenden angrenzenden oder sogar überlappenden Teilmatrizen Anzahl von Spalten haben, die diejenigen der ersten geordneten Liste sind.

6. Verfahren nach einem der Ansprüche 1 bis 5, bei dem für mindestens eine Faltungsschicht, vor der gebündelten Ausführung der Einzeloperationen mindestens einer Gruppe von Eingangswerten, ein Auffüllen mit Nullen durchgeführt wird, um die Größe der Gruppe zu erhöhen, so dass die Größe der Teilmatrix, die dieser Gruppe entspricht, zunimmt.

7. Verfahren nach einem der Ansprüche 1 bis 6, bei dem eine Tabelle verwendet wird, in der alle Ergebnisse der Einzeloperationen gespeichert werden.

8. Verfahren nach einem der Ansprüche 1 bis 7, bei dem ein spezifischer Zähler (B_C) für jede Teilmatrix verwendet wird, mit dem die Anzahl von verfügbaren Werten gezählt wird.

9. Verfahren nach einem der Ansprüche 1 bis 8, bei dem ein spezifischer Zähler (B_C) für jedes Neuron verwendet wird, mit dem die Anzahl von für dieses Neuron ausgeführten Einzeloperationen gezählt wird.

10. Verfahren nach einem der Ansprüche 1 bis 9, bei dem, wenn die Schicht eine Faltungsschicht ist, in einer Tabelle (I_B) die Adressen der Werte jedes in den Einzeloperationen jeder Teilmatrix verwendbaren Filters gespeichert werden.

11. Verfahren nach einem der Ansprüche 1 bis 10, umfassend das Erhalten der Gruppen von Eingangswerten.

12. Verfahren nach einem der Ansprüche 8 und 11, bei dem, für mindestens eine Schicht, das Erhalten einer der Gruppen von Eingangswerten durchgeführt wird, wenn der spezifische Zähler der Teilmatrix, welcher der einen der Gruppen von Eingangswerten entspricht, ein Maximum erreicht, das gleich der Anzahl von Werten der Teilmatrix ist.

13. Verfahren zur Vorbereitung eines künstlichen neuronalen Netzes, das dazu ausgestaltet ist, Daten zu verarbeiten, wobei das Verfahren von einem Computersystem (100) durchgeführt wird, wobei das künstliche neuronale Netz mehrere aufeinander folgende Schichten (L1, L2) aus Neuronen (N11, N), Pooling- oder Faltungsschichten (C1, C2), umfasst, die alle Tensoren (MI1) von Eingangswerten der Schichten zugeordnet sind, wobei jedes Neuron einem rezeptiven Feld mit Eingangswerten zugeordnet ist, die zu einem Tensor (MI1, MI2) von Eingangswerten der Schicht des Neurons gehören, wobei das Verfahren zur Vorbereitung für jede Schicht der mehreren aufeinander folgenden Schichten umfasst:
das Erhalten von Gruppen von Eingangswerten, umfassend eine Identifizierung der Eingangswerte, die die Zugehörigkeitsbedingungen zu Teilmatrizen (B1,..., B6) von reorganisierten Matrizen erfüllen, wobei diese Teilmatrizen Extrakte sind, die aus einer Division von reorganisierten Matrizen (RMI1) resultieren, wobei jede reorganisierte Matrix einem Tensor von Eingangswerten zugeordnet ist, und in der jede Spalte (CA, CB, CC, CD) einem rezeptiven Feld (RCA, RCB, RCC, RCD) mit Eingangswerten des Tensors von Eingangswerten der Schicht entspricht und jede Zeile dieser Spalte einem Wert des rezeptiven Felds von Eingangswerten entspricht, wobei die Division der reorganisierten Matrix dazu ausgestaltet ist, die reorganisierte Matrix in eine Mehrzahl von angrenzenden oder überlappenden Teilmatrizen zu dividieren, die zufällige Breiten und gegebene Höhen haben
eine Ausgestaltung des künstlichen neuronalen Netzes, damit es gebündelt (EXEC_GR) Einzeloperationen ausführt, was es ermöglicht, die Werte von Neuronen der mehreren aufeinander folgenden Schichten zu erhalten, wobei jede gebündelte Ausführung Einzeloperationen an einer Gruppe von Eingangswerten umfasst, wobei die gebündelten Ausführungen durchgeführt werden gemäß:
- einer Verfügbarkeit der Werte der Teilmatrizen jeder gebündelten Ausführung,
- einer gegebenen Ausführungsreihenfolge der Teilmatrizen einer selben Schicht, wenn die Werte von mehreren Teilmatrizen verfügbar sind,
und, wenn die Einzeloperationen einer Spalte einer reorganisierten Matrix ausgeführt worden sind, man den Wert eines oder mehrerer Neuronen, das bzw. die dem rezeptiven Feld der Spalte entsprechen, erhält.

14. Verfahren nach Anspruch 13, umfassend für jede Schicht der mehreren aufeinander folgenden Schichten ein Erhalten einer reorganisierten Matrix, die dem Tensor von Eingangswerten der Schicht zugeordnet ist, in der jede Spalte einem rezeptiven Feld mit Eingangswerten des Tensors von Eingangswerten der Schicht entspricht und jede Zeile dieser Spalte einem Wert des rezeptiven Felds mit Eingangswerten entspricht, eine Division der reorganisierten Matrix in eine Mehrzahl von angrenzenden oder überlappenden Teilmatrizen, die zufällige Breiten und gegebene Höhen haben, wobei jede Teilmatrix Gruppen von Eingangswerten des Tensors von Eingangswerten umfasst.

15. Computersystem (100) zur gesicherten Verarbeitung von Daten durch ein künstliches neuronales Netz (103) des Systems, das Netz umfassend mehrere aufeinander folgende Schichten (L1, L2) von Neuronen (N11, N) zum Pooling oder zur Faltung, die alle Tensoren (MI1) von Eingangswerten der Schichten zugeordnet sind, wobei jedes Neuron einem rezeptiven Feld (RC1, RCA) mit Eingangswerten zugeordnet ist, das zu einem Tensor (MI1, MI2) von Eingangswerten der Schicht des Neurons gehört, wobei die Verarbeitung durch gebündelte Ausführungen ein Einzeloperationen implementiert wird, was es ermöglicht, die Werte von Neuronen der mehreren aufeinander folgenden Schichten zu erhalten, wobei jede gebündelte Ausführung Einzeloperationen an einer Gruppe von Eingangswerten eines Tensors von Eingangswerten umfasst, wobei die Werte dieser Gruppe von Werten so ausgewählt sind, dass sie einer Teilmatrix entsprechen, die dieser gebündelten Ausführung zugeordnet ist, wobei diese Teilmatrix ein Extrakt ist, das aus einer Division einer Matrix, reorganisierte Matrix (RMI1) genannt, resultiert, die diesem Tensor von Eingangswerten zugeordnet ist und in der jede Spalte (CA, CB, CC, CD) einem rezeptiven Feld (RCA, RCB, RCC, RCD) mit Eingangswerten des Tensors von Eingangswerten der Schicht entspricht und jede Zeile dieser Spalte einem Wert des rezeptiven Felds mit Eingangswerten entspricht,
wobei die Division der reorganisierten Matrix dazu ausgestaltet ist, die reorganisierte in eine Mehrzahl von angrenzenden oder überlappenden Teilmatrizen (B1,..., B6) zu dividieren, die zufällige Breiten und gegebene Höhen haben, und
wobei die gebündelten Ausführungen durchgeführt werden gemäß:
- einer Verfügbarkeit der Werte der Teilmatrizen jeder gebündelten Ausführung,
- einer gegebenen Ausführungsreihenfolge der Teilmatrizen einer selben Schicht, wenn die Werte von mehreren Teilmatrizen verfügbar sind,
und, wenn die Einzeloperationen einer Spalte einer reorganisierten Matrix ausgeführt worden sind, man den Wert eines oder mehrerer Neuronen, das bzw. die dem rezeptiven Feld der Spalte entsprechen, erhält.

16. Computersystem (100) zur Vorbereitung eines künstlichen neuronalen Netzes, das dazu ausgestaltet ist, Daten zu verarbeiten, wobei das Netz mehrere aufeinander folgende Schichten (L1, L2) aus Neuronen (N11, N), zum Pooling oder zur Faltung (C1, C2), umfasst, die alle Tensoren (MI1) von Eingangswerten der Schichten zugeordnet sind, wobei jedes Neuron einem rezeptiven Feld (RC1, RCA) mit Eingangswerten zugeordnet ist, die zu einem Tensor (MI1, MI2) von Eingangswerten der Schicht des Neurons gehören, wobei das System zur Vorbereitung für jede Schicht der mehreren aufeinander folgenden Schichten umfasst:
ein Modul zum Erhalten, für jede Schicht der mehreren aufeinander folgenden Schichten von Guppen von Eingangswerten, umfassend eine Identifizierung der Eingangswerte, die die Zugehörigkeitsbedingungen zu Teilmatrizen von reorganisierten Matrizen erfüllen, wobei diese Teilmatrizen Extrakte sind, die aus einer Division von reorganisierten Matrizen resultieren, wobei jede reorganisierte Matrix einem Tensor von Eingangswerten zugeordnet ist, und in der jede Spalte (CA, CB, CC,, CD) einem rezeptiven Feld (RCA, RCB, RCC, RCD) mit Eingangswerten des Tensors von Eingangswerten entspricht und jede Zeile dieser Spalte einem Wert des rezeptiven Felds mit Eingangswerten entspricht, wobei die Division der reorganisierten Matrix dazu ausgestaltet ist, die reorganisierte Matrix in eine Mehrzahl von angrenzenden oder überlappenden Teilmatrizen zu dividieren, die zufällige Breiten und gegebene Höhen haben, ein Modul zur Ausgestaltung des künstlichen neuronalen Netzes, damit es gebündelt Einzeloperationen ausführt, was es ermöglicht, die Werte von Neuronen der mehreren aufeinander folgenden Schichten zu erhalten, wobei jede gebündelte Ausführung die Einzeloperationen an einer Gruppe von Eingangswerten umfasst, wobei die gebündelten Ausführungen durchgeführt werden gemäß:
- einer Verfügbarkeit der Werte der Teilmatrizen jeder gebündelten Ausführung,
- einer gegebenen Ausführungsreihenfolge der Teilmatrizen einer selben Schicht, wenn die Werte von mehreren Teilmatrizen verfügbar sind,
und, wenn die Einzeloperationen einer Spalte einer reorganisierten Matrix ausgeführt worden sind, man den Wert eines oder mehrerer Neuronen, das bzw. die dem rezeptiven Feld der Spalte entsprechen, erhält.

## Claims

1. Method for processing data using an artificial neural network, the method being implemented by a computer system (100), the artificial neural network comprising several successive pooling (L1, L2) or convolutional (C1, C2) layers of neurons (N11, N) all associated with tensors of input values (MI1) of said layers, each neuron being associated with a receptive field (RCA, RCA) for input values belonging to a tensor (MI1, MI2) of input values of the layer of said neuron, the processing comprising:
grouped executions (EXEC_GR) of individual operations which make it possible to obtain the values of neurons of the several successive layers, each grouped execution comprising individual operations on a group of input values of a tensor of input values, the values of this group of values being chosen to correspond to a submatrix associated with this grouped execution, this submatrix being an extract resulting from a division of a matrix referred to as reorganized matrix (RMI1), associated with this tensor of input values and wherein each column (CA, CB, CC, CD) corresponds to a receptive field (RCA, RCB, RCC, RCD) for input values of the tensor of input values of the layer and each row of this column corresponds to a value of said receptive field for input values,
the division of the reorganized matrix being configured to divide the reorganized matrix into a plurality of contiguous or overlapping submatrices (B1, ..., B6) having random widths and given heights, and
the grouped executions (EXEC_GR) being implemented according to:
- the availability of the values of the submatrices of each grouped execution,
- a given order of execution of the submatrices of the same layer if the values of several submatrices are available,
and, if all the individual operations of a column of a reorganized matrix have been executed, the value of one or more neurons corresponding to the receptive field of the column is obtained.

2. Method according to Claim 1, wherein the grouped executions are further implemented according to:
an order of execution of the submatrices of different layers in which a submatrix of a first layer is processed as a priority with respect to a submatrix of a second layer if the values of these submatrices are available and if the first layer is more distant from the input of the artificial neural network than the second layer.

3. Method according to Claim 1 or 2, wherein, if the layer is a convolutional layer, said division of the reorganized matrix is defined by a first ordered list (L11, L21) of random values of numbers of columns of the submatrices, and by a second ordered list (L12, L22) of, for example, random values of numbers of rows of the submatrices, so that, scanning the reorganized matrix horizontally, the successive contiguous, or even overlapping, submatrices have numbers of columns which are those of the first ordered list and, scanning the reorganized matrix vertically, the successive contiguous or overlapping submatrices have numbers of rows which are those of the second ordered list.

4. Method according to Claim 3, wherein the values of the first ordered list and the values of the second ordered list are all greater than 32 and/or multiples of 32.

5. Method according to any one of Claims 1 to 4, wherein, if the layer is a pooling layer, the division of the reorganized matrix is defined by an ordered list of random values of numbers of columns of the submatrices, so that, scanning the reorganized matrix horizontally, the successive contiguous or overlapping submatrices have numbers of columns which are those of the first ordered list.

6. Method according to any one of Claims 1 to 5, wherein, for at least one convolutional layer, prior to the grouped execution of the individual operations of at least one group of input values, zero padding is implemented in order to increase the size of the group so that the size of the submatrix corresponding to this group increases.

7. Method according to any one of Claims 1 to 6, wherein a table is used in which all the results of the individual operations are stored.

8. Method according to any one of Claims 1 to 7, wherein a counter (B_C) which is specific to each submatrix is used, by means of which the number of available values is counted.

9. Method according to any one of Claims 1 to 8, wherein a counter (C_C) which is specific to each neuron is used, by means of which the number of individual operations carried out for this neuron is counted.

10. Method according to any one of Claims 1 to 9, wherein, if the layer is a convolutional layer, the addresses of the values of each filter which can be used in the individual operations of each submatrix are stored in a table (I_B).

11. Method according to any one of Claims 1 to 10, comprising obtaining said groups of input values.

12. Method according to Claims 8 and 11, wherein, for at least one layer, said groups of input values are obtained when the counter which is specific to the submatrix corresponding to said one of the groups of input values reaches a maximum which is equal to the number of values of the submatrix.

13. Method for preparing an artificial neural network configured to process data, the method being implemented by a computer system (100), the artificial neural network comprising several successive pooling (L1, L2) or convolutional (C1, C2) layers of neurons (N11, N) all associated with tensors (MI1) of input values of said layers, each neuron being associated with a receptive field for input values belonging to a tensor (MI1, MI2) of input values of the layer of said neuron, the preparation method comprising, for each layer of the several successive layers:
obtaining groups of input values comprising identifying the input values which satisfy the conditions of belonging to submatrices (B1, ..., B6) of reorganized matrices, these submatrices being extracts resulting from a division of reorganized matrices (RMI1), each reorganized matrix being associated with a tensor of input values and wherein each column (CA, CB, CC, CD) corresponds to a receptive field (RCA, RCB, RCC, RCD) for input values of the tensor of input values of the layer and each row of this column corresponds to a value of said receptive field for input values, the division of the reorganized matrix being configured to divide the reorganized matrix into a plurality of contiguous or overlapping submatrices having random widths and given heights,
configuring the artificial neural network so that it executes, in a grouped manner (EXEC_GR), individual operations which make it possible to obtain the values of neurons of several successive layers, each grouped execution comprising the individual operations on a group of input values, the grouped executions being implemented according to:
- the availability of the values of the submatrices of each grouped execution,
- a given order of execution of the submatrices of the same layer if the values of several submatrices are available,
and, if all the individual operations of a column of a reorganized matrix have been executed, the value of one or more neurons corresponding to the receptive field of the column is obtained.

14. Method according to Claim 13, comprising, for each layer of the several successive layers, obtaining a reorganized matrix associated with the tensor of input values of the layer, wherein each column corresponds to a receptive field for input values of the tensor of input values of the layer and each row of this column corresponds to a value of said receptive field for input values, a division of the reorganized matrix into a plurality of contiguous or overlapping submatrices having random widths and given heights, each submatrix comprising groups of input values of the tensor of input values.

15. Computer system (100) for securely processing data using an artificial neural network (103) of the system, the network comprising several successive pooling or convolution layers (L1, L2) of neurons (N11, N) all associated with tensors (MI1) of input values of said layers, each neuron being associated with a receptive field (RC1, RCA) for input values belonging to a tensor (MI1, MI2) of input values of the layer of said neuron,
wherein the processing is implemented by grouped executions of individual operations which make it possible to obtain the values of neurons of the several successive layers, each grouped execution comprising individual operations on a group of input values of a tensor of input values, the values of this group of values being chosen to correspond with a submatrix associated with this grouped execution, this submatrix being an extract resulting from a division of a matrix referred to as reorganized matrix (RMI1), associated with this tensor of input values and wherein each column (CA, CB, CC, CD) corresponds to a receptive field (RCA, RCB, RCC, RCD) for input values of the tensor and input values of the layer and each row of this column corresponds to a value of said receptive field for input values,
the division of the reorganized matrix being configured to divide the reorganized matrix into a plurality of contiguous or overlapping submatrices (B1, ..., B6) having random widths and given heights, and the grouped executions being implemented according to:
- the availability of the values of the submatrices of each grouped execution,
- a given order of execution of the submatrices of the same layer if the values of several submatrices are available,
and, if all the individual operations of a column of a reorganized matrix have been executed, the value of one or more neurons corresponding to the receptive field of the column is obtained.

16. Computer system (100) for preparing an artificial neural network configured to process data, the network comprising several successive pooling (L1, L2) or convolutional (C1, C2) layers of neurons (N11, N) all associated with tensors (MI1) of input values of said layers, each neuron being associated with a receptive field (RC1, RCA) for input values belonging to a tensor (MI1, MI2) of input values of the layer of said neuron, the preparation system comprising, for each layer of the several successive layers:
a module for obtaining, for each layer of the several successive layers, groups of input values comprising identifying the input values which satisfy the conditions of belonging to submatrices of reorganized matrices, these submatrices being extracts resulting from a division of reorganized matrices, each reorganized matrix being associated with a tensor of input values and wherein each column (CA, CB, CC, CD) corresponds to a receptive field (RCA, RCB, RCC, RCD) for input values of the tensor of input values of the layer and each row of this column corresponds to a value of said receptive field for input values, the division of the reorganized matrix being configured to divide the reorganized matrix into a plurality of contiguous or overlapping submatrices having random widths and given heights, a module for configuring the artificial neural network so that it executes, in a grouped manner, individual operations which make it possible to obtain the values of neurons of the several successive layers, each grouped execution comprising the individual operations on a group of input values, the grouped executions being implemented according to:
- the availability of the values of the submatrices of each grouped execution,
- a given order of execution of the submatrices of the same layer if the values of several submatrices are available,
and, if all the individual operations of a column of a reorganized matrix have been executed, the value of one or more neurons corresponding to the receptive field of the column is obtained.
